# EUROPÄISCHE PATENTSCHRIFT

(11) **EP 0 962 801 B1**
(45) Veröffentlichungstag und Bekanntmachung des Hinweises auf die Patenterteilung: **30.01.2002**
(21) Anmeldenummer: 99401153.4
(22) Anmeldetag: 10.05.1999
(51) Int. Cl.: G02B 6/44

(54) **Vorrichtung zur Herstellung eines optischen Kabels**
Apparatus for optical cable manufacturing
Dispositif pour fabriquer une cable à fibre optique

(30) Priorität: 06.06.1998 DE 19825423
(43) Veröffentlichungstag der Anmeldung: 08.12.1999
(73) Patentinhaber: Nexans, 75008 Paris (FR)
(72) Erfinder: Staschewski, Harry, 30853 Langenhagen (DE); Porcher, Klaus, 31275 Lehrte (DE); Arntz, Hans-Joachim, 30855 Langenhagen (DE); Harten, Friedrich, 30171 Hannover (DE)
(74) Vertreter: Döring, Roger, Dipl.-Ing.

(56) Entgegenhaltungen:
- EP-A- 0 708 348
- EP-A- 0 727 274
- WO-A-91/01506
- PATENT ABSTRACTS OF JAPAN vol. 017, no. 182 (P-1518), 8. April 1993 (1993-04-08) & JP 04 335307 A (NKK CORP), 24. November 1992 (1992-11-24)

## Beschreibung

Die Erfindung betrifft eine Vorrichtung zur Herstellung eines optischen Kabels nach dem Oberbegriff des Anspruchs 1.

Aus der DE-A- 44 34 133 ist eine Vorrichtung zur Herstellung eines optischen Kabels bekannt, umfassend eine Vorratsspule, von der ein Metallband abgezogen wird, eine das Metallband zum Rohr formende Formvorrichtung, eine den Längsschlitz des Metallrohres schließende Schweißeinrichtung, sowie zumindest eine Vorratsspule, von welcher ein Lichtwellenleiter abgezogen und in das noch offene Metallrohr eingeführt wird. Der bzw. die Lichtwellenleiter werden zum Schutz gegen mechanische und thermische Einflüsse in ein Röhrchen eingeführt, welches in das Schlitzrohr hineinragt und hinter dem Schweißpunkt endet und die Lichtwellenleiter freigibt.

Damit das optische Kabel längswasserdicht ist und die in dem Metallrohr befindlichen Lichtwellenleiter gegen mechanische Einflüsse geschützt sind, ist der Innenraum des Metallrohres mit einer zähplastischen Masse ausgefüllt. Üblicherweise wird hierfür Petroleumjelly verwendet.

Das Petroleumjelly wird durch ein weiteres Rohr in das Kabel eingefüllt, welches das die Lichtwellenleiter führende Rohr umgibt. Durch den Ringspalt zwischen den Rohren wird das Petroleumjelly unter Druck in das Metallrohr eingefüllt.

Aus der WO-A-9101506 ist ebenfalls ein Verfahren zur Herstellung eines ein oder mehrere Lichtwellenleiter enthaltenden Metallröhrchens bekannt. Dabei wird ein Metallband kontinuierlich zu einem Schlitzrohr geformt und die Längsnaht des Schlitzrohrs durch Laserschweißung geschlossen. Die Lichtwellenleiter werden mittels eines Führungsrohres, welches sich in Durchlaufrichtung bis hinter den Schweißpunkt erstreckt, in das Metallrohr eingebracht. Eine Füllmasse, die eine Längsausbreitung von eingedrungenem Wasser verhindern soll, wird mittels eines in das Schlitzrohr hineinragenden Rohres in das Metallrohr eingefüllt. Auch dieses Füllrohr erstreckt sich bis hinter den Schweißpunkt. Das Metallrohr wird im Bereich des Schweißpunktes durch eine Schutzgasatmosphäre sowohl innen als auch außen vor Korrosion geschützt.

Der vorliegenden Erfindung liegt die Aufgabe zugrunde, die bekannte Vorrichtung dahingehend zu verbessern, daß eine Beeinflussung der Lichtwellenleiter sowie der Füllmassen im Bereich des Schweißpunktes vermieden wird.

Diese Aufgabe wird durch die im Kennzeichen des Anspruchs 1 erfaßten Merkmale gelöst.

Weitere vorteilhafte Ausgestaltungen der Erfindung sind in den Unteransprüchen erfaßt.

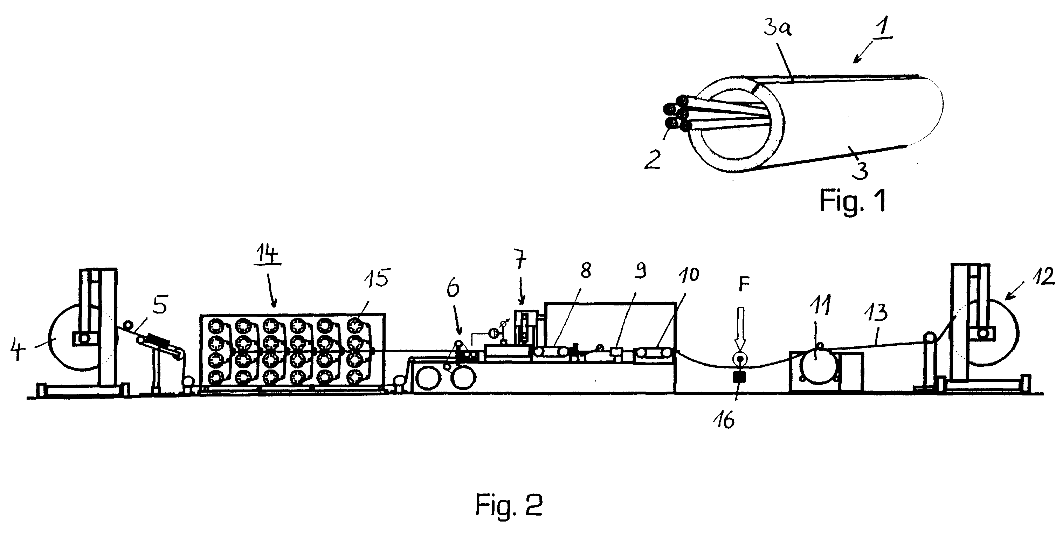

Die Erfindung ist anhand der in den Figuren 1 bis 9 schematisch dargestellten Ausführungsbeispiele näher erläutert.

Die Figur 1 zeigt eine perspektivische Ansicht eines Teils eines nach der Lehre der Erfindung hergestellten optischen Kabels. Das optische Kabel 1 besteht aus den Lichtwellenleitem 2 und dem die Lichtwellenleiter 2 umgebenden Metallrohr 3, welches eine Längsschweißnaht 3a aufweist. Der Freiraum zwischen den Lichtwellenleitem 2 und dem Metallrohr 3 ist mit einem sogenannten Petroleumjelly ausgefüllt, um eine Längswasserwanderung zu verhindern. Die Anzahl der Lichtwellenleiter 2 liegt üblicherweise zwischen sechs und achtundvierzig, kann jedoch bis zu einhundertvierzig betragen. Die Lichtwellenleiter 2 haben eine größere Länge als das Metallrohr 3, verlaufen also wellen-, wendel- oder sinusförmig im dem Metallrohr 3. Die Überlänge beträgt normalerweise in etwa 3 ‰. Die Wanddicke S des Metallrohres 3 beträgt z. B. 0,2 mm, während sein Außendurchmesser 3,5 mm beträgt. Dies sind typische Daten für ein optisches Kabel, welches an Stelle eines Drahtes in einem Leiterseil angeordnet wird. Als Material für das Metallrohr 3 wird Edelstahl bevorzugt. Bei höheren Faserzahlen steigt die Wanddicke S bis zu 0,4 mm und der Außendurchmesser bis auf 6 mm.

Die Figur 2 zeigt eine seitliche Ansicht einer Vorrichtung zur Herstellung eines solchen optischen Kabels.

Von einer Vorratsspule 4 wird ein Band 5 kontinuierlich abgezogen und einer Formvorrichtung 6 zugeführt, in der das Band 5 zu einem Rohr mit Längsschlitz geformt wird. Teil dieser Formvorrichtung 6 ist eine nicht näher bezeichnete Besäumeinrichtung, in welcher das Band 5 exakt auf die benötigte Breite geschnitten wird. Die Formeinrichtung 6 besteht weiterhin aus mehreren nicht näher bezeichneten Formrollensätzen. Der Längsschlitz des geformten Rohres wird mittels einer Laserschweißeinrichtung 7 geschlossen. Für die exakte Führung des geschlitzten Rohres unterhalb der Schweißeinrichtung 7 sorgt ein erster Spannbackenabzug 8, der aus einer Vielzahl das Rohr umfassender Spannbackenpaare besteht, die über eine endlose Kette angetrieben sind. Hinter dem ersten Spannbackenabzug 8 ist eine Rohrreduziereinrichtung 9 z. B. eine Ziehmatrize angeordnet, in welcher der Durchmesser des Rohres verringert wird. Ein zweiter Spannbackenabzug 10 ist hinter der Rohrreduziereinrichtung 9 angeordnet, der an dem gezogenen Rohr angreift und dieses durch die Ziehmatrize zieht. Die Abzugsgeschwindigkeit des zweiten Spannbackenabzuges 10 ist gegenüber der Abzugsgeschwindigkeit des ersten Spannbackenabzugs 8 in Abhängigkeit vom Durchhang des Rohres zwischen der Ziehmatrize und dem ersten Spannbackenabzug 8 geregelt. Hinter dem zweiten Spannbackenabzug 10 befindet sich eine angetriebene Abzugsscheibe 11, auf deren Umfangsfläche das Rohr mit mehreren Windungen aufliegt. Die Abzugsscheibe 11 ist mit einer Abzugsgeschwindigkeit angetrieben, welche gleich der Abzugsgeschwindigkeit des zweiten Spannbackenabzugs 10 ist. Hinter der Abzugsscheibe 11 ist ein Aufwickler 12 vorgesehen, der das Rohr 13 mit leichtem Zug aufwickelt.

Mit 14 ist eine Ablaufvorrichtung für eine Vielzahl von Lichtwellenleitem 2 bezeichnet, die mit einer Vielzahl von Spulen 15 bestückt ist, auf welche die Lichtwellenleiter 2 aufgewickelt sind.

Die Lichtwellenleiter 2 werden von den Spulen 15 abgezogen und in das noch offene Rohr vor der Schweißeinrichtung eingeführt. Als Schutz für die empfindlichen Lichtwellenleiter 2 ragt ein hier nicht dargestelltes ortsfestes Metallröhrchen in das Schlitzrohr, durch dessen Inneres die Lichtwellenleiter 2 hindurchgeleitet werden. Das Metallröhrchen gibt die Lichtwellenleiter 2 frühestens hinter der Schweißeinrichtung 7 frei. Das Metallröhrchen ist von einem weiteren Metallröhrchen umgeben. Durch den von den beiden konzentrischen Metallröhrchen gebildeten Ringspalt wird unter Druck das Petroleumjelly in das Metallrohr 3 eingefüllt. Damit die Lichtwellenleiter 2 in dem Metallrohr 3 mit einer Überlänge vorliegen, wird das Metallrohr 3 kontinuierlich zwischen dem zweiten Spannbackenabzug 10, dessen Spannbackenpaare das Metallrohr 3 fest umgreifen und die durch die Rohrreduzierung entstehenden Verformungskräfte aufbringen, und der Abzugsscheibe 11 elastisch verformt, d. h. gedehnt. Dadurch wird auf die Abzugsscheibe 11 eine gleichgroße Länge von Metallrohr 3 und Lichtwellenleiter 2 aufgewickelt. Auf der Abzugsscheibe 11 "entspannt" sich der Zustand der elastischen Verformung, das Metallrohr 3 verkürzt sich auf den normalen Zustand.

Die elastische Verformung wird durch eine Kraft F bewirkt, die das Metallrohr 3 zwischen den zweiten Spannbackenabzug 10 und der Abzugsscheibe 11 auslenkt. Dies wird durch ein Gewicht 16 erreicht, welches an das Metallrohr 3 z. B. mittels einer nicht dargestellten Rolle angehängt ist. Die Kraft F, d. h. das Gewicht 16, bestimmt das Maß der Auslenkung und damit das Maß der Dehnung.

Bei der vorgegebenen Geometrie und der Materialauswahl für das Metallrohr 3 kann durch Auswahl des Gewichtes 16 eine exakte Überlänge der Lichtwellenleiter 2 in dem Rohr 3 erzeugt werden.

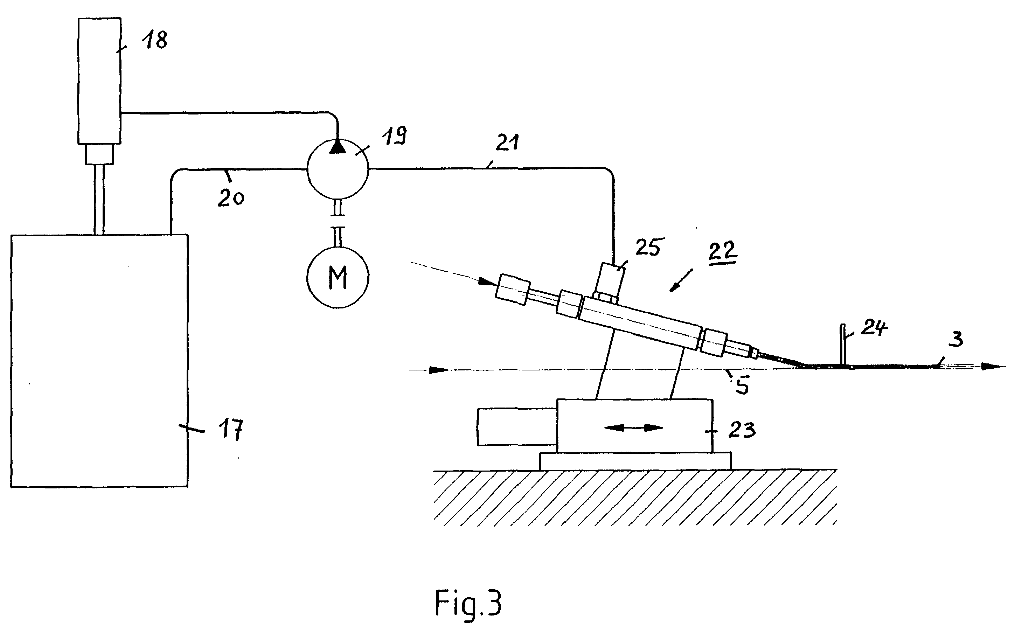

Die Figur 3 zeigt den Teil der Vorrichtung, mit dem das Petroleumjelly in das Metallrohr 3 eingefüllt wird.

Das Petroleumjelly wird in einem Faß 17 angeliefert und mittels einer Faßpumpe 18 aus diesem herausgefördert. Dazu wird das Petroleumjelly, welches bei Raumtemperatur als zähflüssige Masse vorliegt, erwärmt, so daß es fließbar wird. Von der Faßpumpe 18 gelangt das Petroleumjelly zu einer hochgenauen Dosierzahnradpumpe 19, die das Petroleumjelly druck- oder drehzahlgeregelt in das später genauer beschriebene Füllwerkzeug 22 pumpt. Überschüssiges Petroleumjelly wird über eine Bypaßleitung 20 wieder in das Faß 17 zurückgefördert. Eine Förderleitung 21, welche temperaturgeregelt ist, führt das erwärmte Petroleumjelly dem Füllwerkzeug 22 zu, welches ebenfalls temperaturgeregelt ist. Die Förderleitung 21 ist mit dem Füllwerkzeug 22 über eine Kupplung 25 schnell lösbar verbunden, um das Einführen des Füllwerkzeugs 22 in das Metallrohr 3 bzw.3a beim Starten des Fertigungsprozesses problemlos zu ermöglichen.

Die Lichtwellenleiter 2 werden ebenfalls in das Füllwerkzeug 22 eingeführt.

Das Füllwerkzeug 22 ist auf einem Verschiebeschlitten 23 montiert, der manuell oder elektrisch in Schritten oder permanent in Fertigungsrichtung verstellt wird. Die Verstellgeschwindigkeit ist einstellbar, abhängig von der Fertigungsgeschwindigkeit, dem Verschmutzungsgrad des Metallbandes 5 etc., aber stets sehr niedrig, z. B. in Schritten 3 mm/3h oder mit v = 1 mm/h.

Der darin liegende Vorteil ist, daß dadurch eine negative Beeinflussung des Füllwerkzeugs 22, z. B. durch Verbrennungsrückstände im Bereich des Schweißpunktes vermieden ist. Durch die Verstellung wird der mit Verbrennungsrückständen versehene Bereich des Füllwerkzeugs 22 aus dem Schweißbereich verschoben.

Damit das Füllwerkzeug 22 im Schweißbereich möglichst weit von dem oben gelegenen Schweißpunkt des Metallrohres 3 entfernt ist, wird der in das Metallrohr 3 hineinragende Teil des Füllwerkzeugs 22 durch einen federbelasteten Stift 24 auf das Metallband 5 bzw. gegen den unteren Bereich des Schlitzrohres gedrückt.

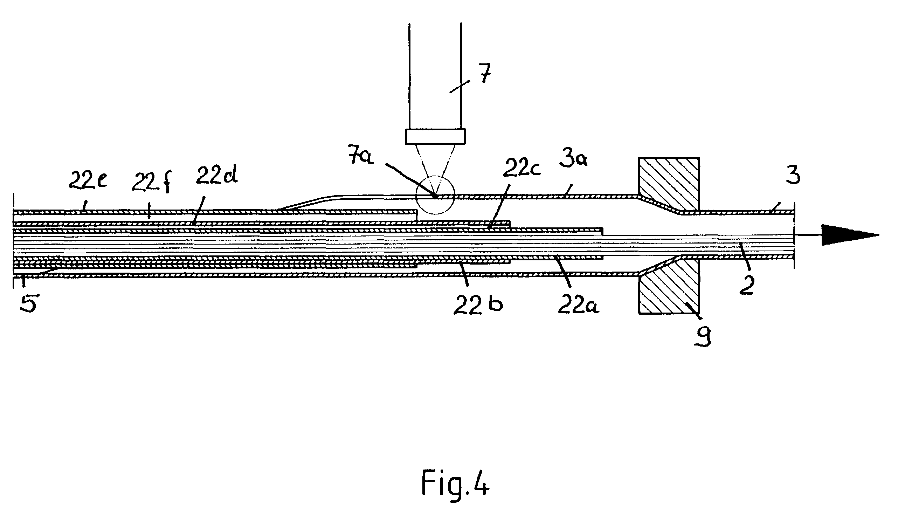

Figur 4 zeigt den Teil des Füllwerkzeugs 22, der in das noch nicht reduzierte Metallrohr 3a hineinragt. Dieser Teil des Füllwerkzeugs 22 besteht aus einem die Lichtwellenleiter 2 führenden inneren Rohr 22a sowie einem das innere Rohr 22a umgebenden äußeren Rohr 22b mit einem wesentlich größeren Durchmesser. Das Petroleumjelly wird durch den Spalt 22c zwischen den Rohren 22a und 22b in das Metallrohr 3a gefördert. Sowohl das innere Rohr 22a als auch das äußere Rohr 22b münden hinter dem Schweißpunkt 7a, so daß sowohl das Petroleumjelly als auch die Lichtwellenleiter 2 gegen eine übermäßige Erhitzung geschützt sind.

Das äußere Rohr 22b weist eine Eindellung 22d auf, die mit einer Abdeckung 22e versehen ist, so daß sich ein Kanal 22f bildet, durch den ein Kühl- oder Schutzgas in den Schweißbereich geleitet werden kann. Vorzugsweise wird hierfür Argon verwendet.

Das Gas tritt aus dem Kanal 22 f aus und umspült den unteren Schweißnahtbereich und kühlt dabei diesen Bereich und schützt ihn vor Oxidation. Das Gas tritt aus dem Kanal 22f aus und wird entgegen der Fertigungsrichtung aus dem Metallrohr 3a nach außen geleitet.

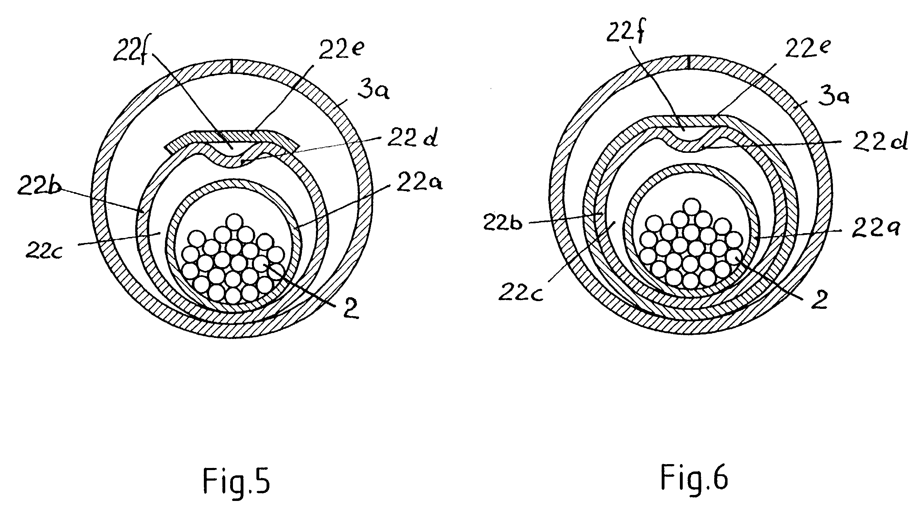

Die Figuren 5 und 6 zeigen einen Schnitt durch den Teil des Füllwerkzeuges 22, der im Metallrohr 3a befindlich ist.

In Figur 5 ist die Abdeckung 22e ein Metallstreifen, der die Eindellung 22d überdeckt und mit dem äußeren Rohr 22 z. B. verlötet ist.

In Figur 6 ist die Abdeckung 22e ein über das äußere Rohr 22b geformtes Rohr, welches im Bereich der Eindellung 22d abgeplattet ist.

Wie in den Figuren 5 und 6 deutlich erkennbar ist, befindet sich der im Metallrohr 3b angeordnete Teil des Füllwerkzeugs 22 im größstmöglichen Abstand zum Schweißpunkt 7a.

In Figur 4 liegt der Austrittspunkt für das Gas in Fertigungsrichtung gesehen vor dem Schweißpunkt 7a.

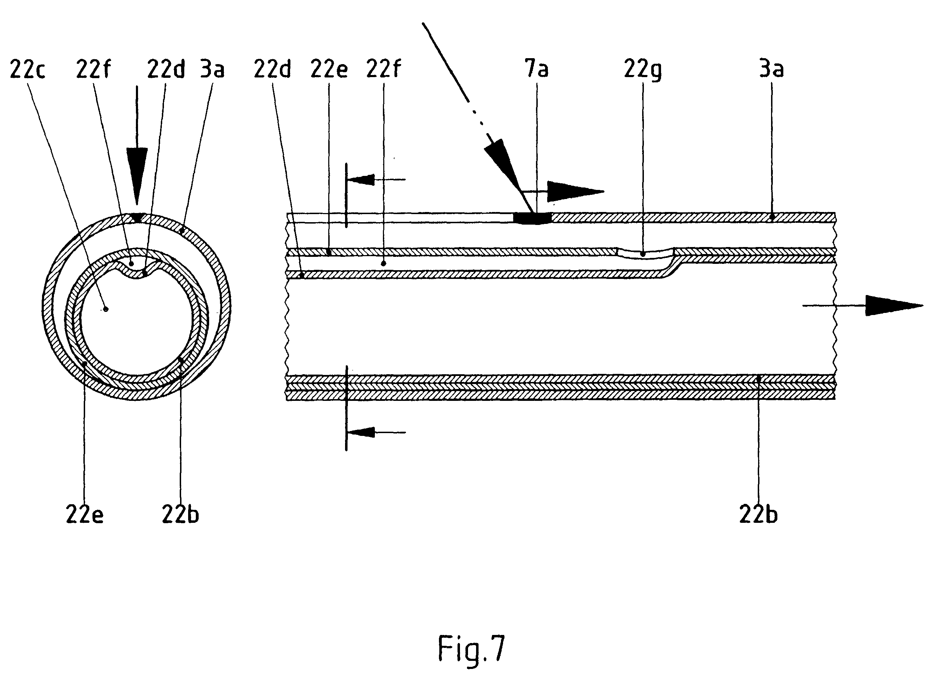

Eine Alternative hierzu zeigt Figur 7. Hier besteht die Abdeckung 22e aus einem Rohr, welches auf das äußere Rohr 22b aufgezogen ist. Der Kanal 22f endet hier hinter dem Schweißpunkt 7a. Eine in der Abdeckung 22e vorgesehene Austrittsöffnung 22g ermöglicht den Gasaustritt hinter dem Schweißpunkt 7a. Das hat den Vorteil, daß im Falle eines Schweißfehlers der Laserstrahl nicht auf einen Bereich des Füllwerkzeugs 22 trifft, in welchem ein hoher Druck vorherrscht. Im Spalt 22c herrscht ein Druck von bis zu 25 bar. Im Kanal 22f ist ein nahezu druckloser Zustand.

Bei dem in der Figur 7 dargestellten Ausführungsbeispiel ist das innere Rohr für die Führung der Lichtwellenleiter der Deutlichkeit halber weggelassen.

Der Vorteil dieser Ausgestaltung liegt darin , daß das Füllwerkzeug 22 beim Ausströmen des Gases aus der Öffnung 22g leicht angehoben wird und dadurch das Gas frei austreten und die gesamte äußere Oberfläche des Füllwerkzeuges kühlen kann.

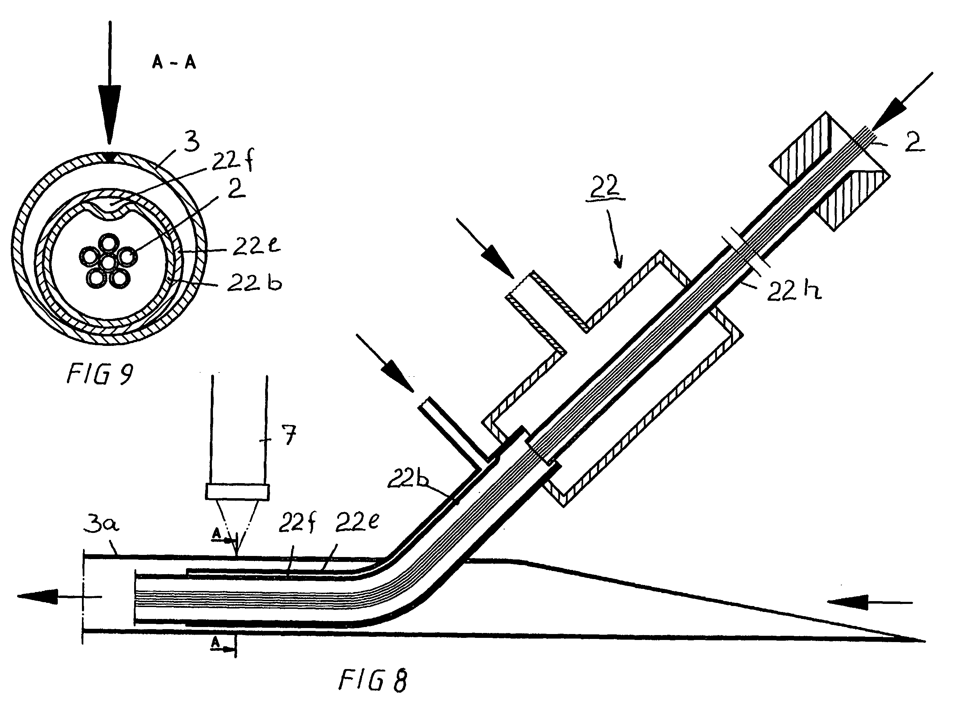

In den Figuren 8 und 9 ist ein weiteres Ausführungsbeispiel der Erfindung dargestellt.

Das Füllwerkzeug 22 besteht aus den Rohren 22b und 22e, welche mit ihren Enden in das Metallrohr 3a hineinragen.

In das nach außen weisende Ende des Rohres 22b ragt das Ende eines Rohres 22h, in welchem die Lichtwellenleiter 2 geführt werden.

Die zähplastische Masse dringt durch den Spalt zwischen den Rohren 22h und 22b in das Rohr 22b ein und wird gemeinsam mit den Lichtwellenleitem 2 in das Metallrohr 3a gefördert.

Diese Ausführungsform ist vorteilhaft bei der Herstellung von Lichtwellenleiterkabeln mit nur wenigen Lichtwellenleitern 2 und entsprechend kleinem Metallrohr 3. Bei solchen Kabeln würde die zähplastische Masse infolge des hohen aufzubringenden Druckes nicht in den geringen Querschnitt des Metallrohres einzubringen sein.

Zur Lösung dieses Problems weist das Rohr 22h eine solche Länge auf, daß der Druck in der zähplastischen Masse bei einem Rückströmen der Masse entgegen der Zuführungsrichtung der Lichtwellenleiter 2 allmählich abgebaut wird, so daß ein Austritt der zähplastischen Masse aus dem Ende, in welches die Lichtwellenleiter eintreten, vermieden ist. Zusätzlich kann das Rohr 22h noch von außen gekühlt werden, um die Masse in dem Rohr 22 abzukühlen und somit deren Viskosität zu erhöhen.

## Patentansprüche

1. Vorrichtung zur Herstellung eines optischen Kabels (1), das aus einem Metallrohr (3) besteht, in welchem zumindest ein Lichtwellenleiter (2) in einer zähplastischen Masse angeordnet ist, bestehend aus einer ein Metallband (5) kontinuierlich zu einem Schlitzrohr formenden Einrichtung (6), einer in Fertigungsrichtung gesehen hinter der Einrichtung (6) befindlichen Schweißeinrichtung (7) sowie einem zwischen der Einrichtung (6) und der Schweißeinrichtung (7) befindlichen Füllwerkzeug (22) mit zumindest einem Rohr (22b) zum Einbringen der Lichtwellenleiter (2) und der zähplastischen Masse in das Metallrohr (3), wobei das eine Ende des einen Rohres vor der Schweißeinrichtung (7) in das Schlitzrohr hineinragt, **dadurch gekennzeichnet, daß** das eine Rohr (22b) an seiner der Schweißeinrichtung (7) zugekehrten Oberfläche eine Eindellung (22d) aufweist, welche nach oben abgedeckt ist und dadurch einen Kanal (22f) zur Durchführung von Kühl- oder Schutzgas bildet.

2. Vorrichtung nach Anspruch 1, **dadurch gekennzeichnet, daß** in dem einen Rohr (22b) ein weiteres Rohr (22a) zur Führung der Lichtwellenleiter angeordnet ist und daß zwischen dem weiteren Rohr (22a) und dem Rohr (22b) ein Spalt (22c) zur Führung der zähplastischen Masse vorgesehen ist.

3. Vorrichtung nach Anspruch 1 oder 2, **gekennzeichnet durch** ein dünnes Rohr (22h) zur Einführung der Lichtwellenleiter dessen Ende in das außerhalb des Metallrohres (3) befindliche Ende des Rohres (22b) hineinragt, so daß ein Spalt zwischen den Rohren (22b,22h) entsteht, **durch** den die zähplastische Masse in das Rohr (22b) einpressbar ist.

4. Vorrichtung nach Anspruch 3, **dadurch gekennzeichnet, daß** das dünnere Rohr (22h) eine derartige Länge aufweist, daß die zähplastische Masse nur in Richtung auf den Spalt zwischen dem Metallrohr (3) und dem dünneren Rohr (22h) gefördert wird.

5. Vorrichtung nach Anspruch 2, **dadurch gekennzeichnet, daß** das innere (22a) und das äußere Rohr (22b) sowie die Abdeckung (22e) der Eindellung (22d) aus Metall bestehen.

6. Vorrichtung nach Anspruch 2 oder 5, **dadurch gekennzeichnet, daß** das äußere (22b) und das innere Rohr (22a) in Fertigungsrichtung gesehen hinter dem Schweißpunkt (7a) enden und das innere Rohr (22a) aus dem äußeren Rohr (22b) herausragt.

7. Vorrichtung nach einem der Ansprüche 1 bis 6, **dadurch gekennzeichnet, daß** die Abdeckung (22e) für die Eindellung (22d) in Fertigungsrichtung gesehen vor dem Schweißpunkt (7a) endet.

8. Vorrichtung nach einem der Ansprüche 1 bis 7, **dadurch gekennzeichnet, daß** die Eindellung (22d) sich in Fertigungsrichtung bis kurz hinter den Schweißpunkt (7a) erstreckt und daß am Ende der Eindellung (22d) in der Abdeckung (22e) eine Austrittsöffnung (22g) für das Kühl- oder Schutzgas vorgesehen ist

9. Vorrichtung nach einem der Ansprüche 1 bis 8, **dadurch gekennzeichnet, daß** die Abdeckung (22e) durch ein das äußere Rohr (22b) umhüllendes Rohr gebildet ist.

10. Vorrichtung nach einem der Ansprüche 1 bis 8, **dadurch gekennzeichnet, daß** die Abdeckung (22e) durch einen die Eindellung (22d) überdeckenden Streifen gebildet ist.

11. Vorrichtung nach einem der Ansprüche 1 bis 10, **gekennzeichnet durch** ein das innere (22a) und das äußere Rohr (22b) sowie die Abdeckung (22e) auf das Metallband (5) bzw. auf den dem Schweißpunkt (7a) gegenüberliegenden Bereich des Schlitz- bzw. Metallrohres (3) drückendes Werkzeug (8).

12. Vorrichtung nach einem der Ansprüche 1 bis 11, **dadurch gekennzeichnet, daß** das innere (22a) und das äußere Rohr (22b) sowie die Abdeckung (22e) auf einem Verschiebeschlitten (23) angeordnet sind.

13. Vorrichtung nach einem der Ansprüche 1 bis 12, **dadurch gekennzeichnet, daß** ein Vorratsbehälter (17) für die zähplastische Masse, eine die zähplastische Masse fördernde Pumpe (18) sowie eine die Masse druck- oder drehzahlgeregelt in das Metallrohr (3 bzw.3a) fördernde Dosierzahnradpumpe (19) vorgesehen sind.

14. Vorrichtung nach Anspruch 13, **dadurch gekennzeichnet, daß** eine Bypassleitung (20) zur Leitung der überschüssigen Masse in den Vorratsbehälter (17) vorgesehen ist.

15. Vorrichtung nach Anspruch 13 oder 14, **dadurch gekennzeichnet, daß** die Förderleitung (21) zwischen der Zahnradpumpe (19) und dem Anfang des inneren (22a) bzw. äußeren Rohres (22b) sowie das innere (22a) und/oder das äußere Rohr (22b) beheizbar ist, vorzugsweise temperaturgeregelt ist.

## Claims

1. A device for manufacturing an optical cable (1) which consists of a metal tube (3) in which at least one optical fiber (2) has been arranged in a viscous material, consisting of a device (6) continuously forming a metal strip (5) into an open seam tube, a welding device (7) behind the device (6) viewed in the direction of manufacture, as well as a filling tool (22) between the device (6) and the welding device (7) with at least one tube (22b) to feed the optical fibers (2) and the viscous material into the metal tube (3), whereby one end of one tube extends into the open seam tube to before the welding device (7), **characterized in that** one tube (22b) has on its surface facing the welding device (7) an indentation (22d) that is covered on top to form a channel (22f) to conduct cooling or inert gas.

2. A device according to claim 1, **characterized in that** an additional tube (22a) for the introduction of the optical fibers is placed in the one tube (22b) and that between the additional tube (22a) and the tube (22b) a gap (22c) is provided for the introduction of the viscous material.

3. A device according to claim 1 or 2, **characterized in that** a thin tube (22h) for the introduction of the optical fibers extends into the end of the tube (22b) that is located outside the metal tube (3) in such a way that a gap is created between the tubes (22b, 22h) through which the viscous material is pressed into the tube (22b).

4. A device according to claim 3, **characterized in that** the length of the thinner tube (22h) is such that the viscous material is delivered only in the direction of the gap between the metal tube (3) and the thinner tube (22h).

5. A device according to claim 2, **characterized in that** the inner tube (22a) and the outer tube (22b) as well as the covering (22e) of the indention (22d) are made of metal.

6. A device according to claim 2 or 5, **characterized in that** , viewed in the direction of manufacture the outer tube (22b) and the inner tube (22a) end behind the welding point (7a) and the inner tube (22a) extends out of the outer tube (22b).

7. A device according to one of the claims 1 to 6, **characterized in that**, viewed in the direction of manufacture the covering (22e) for the indention (22d) ends before the welding point (7a).

8. A device according to one of the claims 1 to 7, **characterized in that** the indentation (22d) extends in the direction of manufacture to just behind the welding point (7a), and that at the end of the indention 22(d) an exit opening (22g) is provided in the covering (22e) for the cooling or inert gas.

9. A device according to one of the claims 1 to 8, **characterized in that** the covering (22e) is formed by a tube surrounding the outer tube (22b).

10. A device according to one of the claims 1 to 8, **characterized in that** the covering (22e) is formed by a strip covering the indention (22d).

11. A device according to one of the claims 1 to 10, **characterized in that** a tool (8) that presses the inner (22a) and outer tube (22b) as well as the covering (22e) onto the metal strip (5) or onto the area of the open seam or metal tube (3) opposite the welding point (7a).

12. A device according to one of the claims 1 to 11, **characterized in that** the inner tube (22a) and the outer tube (22b) as well as the covering (22e) are placed on a sidetracking skate (23).

13. A device according to one of the claims 1 to 12, **characterized in that** a storage drum (17) is provided for the viscous material, as well as a pump (18) to convey the viscous material, and a pressure- or speed-controlled dosing gear pump (19) to convey the material into the metal tube (3 or 3a).

14. A device according to claim 13, **characterized in that** a bypass line (20) is provided to conduct excess material into the storage drum (17).

15. A device according to claim 13 or 14, **characterized in that** the feed line (21) between the gear pump (19) and the beginning of the inner tube (22a) or outer tube (22b) is heatable and preferably temperature-controlled as well as the inner tube (22a) and/or outer tube (22b).

## Revendications

1. Dispositif pour la fabrication d'un câble optique (1), constitué d'un tube métallique (3) dans lequel au moins un guide d'ondes optiques (2) est disposé dans une masse visqueuse, un dispositif comprenant une bande métallique (5) tirée en permanence vers un dispositif de formage (6) produisant un tube fendu, d'un dispositif de soudage (7) situé après le dispositif (6) dans le sens de fabrication ainsi que d'un outil de remplissage (22) situé entre le dispositif (6) et le dispositif de soudage (7) et comportant au moins un tube (22b) pour l'introduction des guides d'ondes optiques (2) et de la masse visqueuse dans le tube métallique (3), et où une des extrémités d'un tube pénètre dans le tube fendu avant le dispositif de soudage (7), un dispositif **caractérisé par le fait que** l'un des tubes (22) comporte sur sa surface tournée vers le dispositif de soudage (7) une dépression (22d) qui est fermée vers le haut en créant ainsi un canal (22f) pour le passage d'un gaz de refroidissement ou de protection.

2. Un dispositif conforme à la revendication 1, et **caractérisé par le fait que** dans un des tubes (22b) un autre tube (22a) est disposé pour le guidage des guides d'ondes optiques, et qu'un passage (22c) est ainsi créé entre le deuxième tube (22a) et le premier tube (22b) servant à l'introduction de la masse visqueuse.

3. Un dispositif conforme à une des revendications 1 ou 2, et **caractérisé par le fait qu'**un tube de faible diamètre (22h) sert à l'introduction des guides d'ondes optiques et dont l'extrémité pénètre dans l'extrémité du tube (22b) située hors du tube métallique (3), de telle manière qu'un passage entre les tubes (22b, 22h) soit créé permettant d'injecter la masse visqueuse dans le tube (22b).

4. Un dispositif conforme à la revendication 3, et **caractérisé par le fait que** le tube de faible diamètre (22h) possède une longueur telle que la masse visqueuse se déplace uniquement dans la direction du passage entre le tube métallique (3) et le tube de faible diamètre (22h).

5. Un dispositif conforme à la revendication 2, et **caractérisé par le fait que** les tubes interne (22a) et externe (22b) ainsi que le couvercle (22e) de la dépression sont en métal.

6. Un dispositif conforme à une des revendications 2 ou 5, et **caractérisé par le fait que** les tubes interne (22a) et externe (22b) se terminent, vu dans le sens de fabrication, après le point de soudure (7a) et que le tube interne (22a) sorte du tube externe (22b).

7. Un dispositif conforme à une des revendications 1 à 6, et **caractérisé par le fait que** le couvercle (22e) de la dépression (22d) se termine avant le point de soudure (7a), vu dans le sens de fabrication.

8. Un dispositif conforme à une des revendications 1 à 7, et **caractérisé par le fait que** la dépression (22d), vue dans le sens de fabrication, s'étend jusqu'à un point situé juste après le point de soudage (7a), et que à l'extrémité de la dépression (22d) est prévu un orifice de sortie (22g) dans le couvercle (22e) pour le passage du gaz de protection ou de refroidissement.

9. Un dispositif conforme à une des revendications 1 à 8, et **caractérisé par le fait que** le couvercle (22e) est constitué par le tube externe (22b) d'enveloppe.

10. Un dispositif conforme à une des revendications 1 à 8, et **caractérisé par le fait que** le couvercle (22e) est constitué par une bande recouvrant la dépression (22d).

11. Un dispositif conforme à une des revendications 1 à 10, et **caractérisé par** la présence d'un outil (8) faisant pression sur les tubes interne (22a) et externe (22b) ainsi que sur le couvercle (22e), sur la bande métallique (5), ou au point de soudage (7a) sur la zone opposée à la fente du tube métallique (3).

12. Un dispositif conforme à une des revendications 1 à 11, et **caractérisé par le fait que** les tubes interne (22a) et externe (22b) ainsi que le couvercle (22e) sont montés sur un chariot coulissant (23).

13. Un dispositif conforme à une des revendications 1 à 12, et **caractérisé par le fait qu'**on a prévu un réservoir (17) de masse visqueuse, une pompe de transfert (18) pour la masse visqueuse ainsi qu'une pompe à engrenages (19), à régulation par pression ou par vitesse de rotation, et servant à injecter la masse dans le tube métallique (3 ou 3a)

14. Un dispositif conforme à la revendication 13, et **caractérisé par le fait qu'**une conduite by-pass (20) est prévue pour le retour du trop-plein de masse visqueuse dans son réservoir (17).

15. Un dispositif conforme à une des revendications 13 ou 14, et **caractérisé par le fait que** la conduite d'alimentation (21) peut être chauffée ou possède une régulation de température entre la pompe à engrenages (19) et le début du tube interne (22a) ou du tube externe (22b), ainsi que sur le tube interne (22a) et/ou le tube externe (22b).
